# EUROPÄISCHE PATENTANMELDUNG

(11) **EP 2 626 965 A1**
(43) Veröffentlichungstag der Anmeldung: **14.08.2013**
(21) Anmeldenummer: 13154613.7
(22) Anmeldetag: 08.02.2013
(51) Int. Cl.: H02H 11/00

(54) **Stromverlängerung und Prüfeinheit**

(30) Priorität: 10.02.2012 DE 202012001300 U
(71) Anmelder: Brandes, Peter, 31241 Ilsede (DE)
(72) Erfinder: Brandes, Peter, 31241 Ilsede (DE)
(74) Vertreter: Gerstein, Hans Joachim

(57) **Zusammenfassung**

Eine Stromleitungsverlängerung (1) mit einer elektrischen Leitung (4) und mit mindestens einer mit der elektrischen Leitung (4) verbundenen Steckkontakteinheit (7) wird beschrieben. Die Stromleitungsverlängerung (1) hat eine mit der elektrischen Leitung (4) elektrisch leitend verbundene Prüfeinheit (8), die zur Prüfung des Vorhandenseins einer Verbindung eines Schutzleiters der Steckkontakteinheit (7) mit einer Schutzerde (PE) eingerichtet ist. Dies ermöglicht eine zwangsweise Prüfung bei jeder Inbetriebnahme der Stromleitungsverlängerung (1) und der primären Stromversorgung eines elektrischen Betriebsmittels (z. B. Kabeltrommel), wobei es unerheblich ist mit welcher Polzuordnung der Stecker in die primäre Versorgungssteckdose hineingesteckt ist.

## Beschreibung

Die Erfindung betrifft eine Stromleitungsverlängerung mit einer elektrischen Leitung und mit mindestens einer mit der elektrischen Leitung verbundenen Steckkontakteinheit.

Die Erfindung betrifft weiterhin eine (elektronische) Prüfeinheit zum Prüfen des Vorhandenseins einer Verbindung eines Schutzleiteranschlusses einer Steckkontakteinheit einer solchen Stromleitungsverlängerung mit einer Schutzerde.

Stromleitungsverlängerungen sind insbesondere von ortsveränderlichen Kabeltrommeln und Verteilern bekannt.

DE 102 20 693 A1 offenbart einen Schutzschalter für eine Kabeltrommel zur Unterbrechung eines über eine elektrische Leitung fließenden Stroms. Der Schutzschalter hat einen Thermoauslöser zur Unterbrechung des Stroms, wenn aufgrund des durch die Leitung fließenden Stroms ein Temperaturwert überschritten wird. Weiterhin ist ein Überstromauslöser zur Unterbrechung des Stroms vorgesehen, wenn der durch die Leitung fließende Strom eine vorgegebene Abschaltstromstärke übersteigt. Durch Einsatz des Thermoauslösers unter Verwendung eines speziellen Widerstandselementes als Überstromauslöser kann auf einem separaten Abschaltmechanismus eines Überstromauslösers verzichtet werden. Damit sind keine teuren zusätzlichen Überstromauslöser oder ein FI-Schutzschalter erforderlich.

Weiterhin ist aus DE 10 2009 054 834 A1 eine selbstüberwachende Anschlussleitung mit mindestens zwei Spannungsversorgungsleitern N, L zur Übertragung einer Versorgungsspannung mit zwei gegeneinander isolierten Schutzleitern bekannt, die an einem ersten Ende miteinander leitend verbunden ist. Am zweiten Ende ist eine Messvorrichtung zur Widerstandsmessung eines dem PE- und Messleiter umfassenden Messkreises vorgesehen. Bei Widerstands-überschreitungen wird ein Warnsignal ausgegeben. Der Schutzleiter wird somit über einen zusätzlichen Messleiter in der Anschlussleitung zurückgeführt, um auf diese Weise eine Unterbrechung des Schutzleiters bestimmen zu können. Dieses ist relativ aufwändig und stellt immer noch keine Verbindung des Schutzleiters mit Schutzerde PE und damit keinen ordnungsgemäßen und sicheren Betrieb sicher.

DE 199 21 295 A1 offenbart eine Einrichtung zur Überwachung des Schutzleiters eines elektrischen Kabels, das der Stromversorgung eines galvanisch getrennten Trafos eines elektrischen Schweißgerätes dient. Mit Hilfe der Einrichtung ist ermittelbar, ob der Schutzleiter im Fehlerfall stromführend ist. Es wird davon ausgegangen, dass der Schutzleiter PE nicht stromführend sein kann, wenn eine Schweißzange korrekt am Werkstück anliegt.

Ausgehend hiervon ist es Aufgabe der vorliegenden Erfindung, eine verbesserte Stromverlängerung zu schaffen, bei der durch Prüfung ein ordnungsgemäßer Zustand festgestellt werden kann, um so eine unzulässige Inbetriebnahme verhindern zu können.

Die Aufgabe wird durch die Stromverlängerung mit den Merkmalen des Anspruchs 1 gelöst. Vorteilhafte Ausführungsformen sind in den Unteransprüchen beschrieben.

Es wird vorgeschlagen, dass eine Stromleitungsverlängerung mit einer mit der elektrischen Leitung elektrisch leitend verbundene Prüfeinheit ausgerüstet ist, die zur Prüfung des Vorhandenseins einer Verbindung eines Schutzleiteranschlusses der Steckkontakteinheit mit einer Schutzerde eingerichtet ist.

Während bislang Stromleitungsverlängerungen mit einem erst im Fehlerfall anzusprechendem thermischen Überlastschutz und in besonderen Fällen mit Fi-Fehlerschutzschalter oder Sicherung ausgerüstet sind, soll mit Hilfe der Prüfeinheit eine Inbetriebnahme einer Stromverlängerung im unsicheren Zustand ohne Schutzleiteranschluss erkannt werden, um rechtzeitig Maßnahmen zu ergreifen.

Derartige Prüfeinheiten zur Prüfung des Vorliegens eines Schutzleiteranschlusses sind bislang als relativ aufwändige Geräte realisiert. Eine Integration einer solchen Prüfeinheit in eine Stromleitungsverlängerung wurde daher bislang nicht in Betracht gezogen.

Die Integration einer Prüfeinheit zur Prüfung der Verbindung eines Schutzleiteranschlusses der Schutzkontakteinheit mit einer Schutzerde in eine Stromleitungsverlängerung hat den Vorteil, dass ein sicherer Betrieb der Stromleitungsverlängerung bei Inbetriebnahme durch Prüfen des ordnungsgemäßen Anschlusses der Stromleitungsverlängerung mit der Schutzerde sichergestellt wird. Damit wird im Fehlerfall verhindert, dass Fehlerstrom im Fehlerfall anderweitig abfließt und Menschen gefährdet.

Mit der Prüfeinheit gelingt eine unmittelbare und zwangsweise Prüfung der ordnungsgemäßen Verbindung eines elektrischen Gerätes mit Schutzerde ohne den Einsatz zusätzlicher Messgeräte und ohne weiteren Aufwand. Dabei gelingt die ordnungsgemäße Verbindung der Steckkontakteinheit mit der Schutzerde über den Stecker und die Steckdose bis zur primären Spannungsversorgung und es kann eine unzulässige Inbetriebnahme verhindert werden. Z. B. im Falle einer Kabeltrommel wird die Verbund eines Schutzleiteranschlusses einer Steckkontakteinheit mit einer Schutzerde schon primär von einer ersten Stromzapfstelle/Steckdose über den Stecker einschließlich des Leitungsweges bis an die Anschlusssteckdosen der Kabeltrommel geprüft.

Die Prüfeinheit hat vorzugsweise mindestens ein Signalelement zur akustischen und/oder optischen Warnung, wobei die Prüfeinheit zur Aktivierung des mindestens einen Signalelementes bei fehlender Verbindung mit einer Schutzerde eingerichtet ist. Damit wird im Fehlerfall, wenn der Schutzleiteranschluss nicht ordnungsgemäß mit einer Schutzerde verbunden ist, eine Warnung an den Nutzer der Stromleitungsverlängerung ausgegeben, um die Gefahrensituation zu melden.

Besonders vorteilhaft ist es, wenn mindestens ein Spannungsversorgungsleiter der elektrischen Leitung mit einem zugeordneten Steckkontakt der Steckkontakteinheit über eine von der Prüfeinheit ansteuerbare Schalteinheit abschaltbar verbunden ist. Die Prüfeinheit ist dabei jeweils zur Abschaltung der Verbindung zwischen mindestens einem der Spannungsversorgungsleiter und dem zugeordneten Steckkontakt durch Ansteuerung der Schalteinheit eingerichtet, wenn beim Prüfen keine Verbindung des Schutzleiteranschlusses mit einer Schutzerde festgestellt wird. Damit wird die Steckkontakteinheit aktiv vom Spannungsversorgungsnetz getrennt, wenn eine Gefahrensituation durch fehlende Verbindung mit einer Schutzerde erkannt wird.

Die Schalteinheit kann beispielsweise mittels eines Schützes (Relais), einer Thyristorschaltung, einer Triacschaltung, Diacschaltung oder mittels Optokopplern ausgeführt sein. Dabei muss eine hinreichende Leistungsübertragung sichergestellt werden.

Die Prüfeinheit hat vorzugsweise einen Transistor mit einem Steueranschluss, der mit dem Schutzleiteranschluss elektrisch leitend verbunden ist. Der Aufbau einer einfachen und preiswerten Prüfeinrichtung gelingt durch Nutzung eines Transistors, der für höhere Spannungen (250-500) Volt ausgelegt ist (Hochvolttransistor), als eine Art Prüfsensor, der das Vorliegen eines geringen Stromes am Schutzleiteranschluss bei Verbindung der Stromleitungsverlängerung mit Spannungspotential erkennt. In diesem Fall ist der Schutzleiteranschluss korrekt mit einer Schutzerde verbunden. Es wird somit ausgenutzt, dass im korrekten Anschlussfall ein sehr geringer Strom im Mikro-Amper-Bereich (≈10 bis 100 pA) über den Schutzleiteranschluss fließt. Dieser kann dann zur Ansteuerung und Durchschaltung eines Transistors über den Steueranschluss genutzt werden.

Im Fehlerfall, wenn der Schutzleiteranschluss nicht mit einer Schutzerde verbunden ist, kann kein Strom über den Schutzleiteranschluss fließen, so dass der Transistor dann ausgeschaltet ist. In Abhängigkeit von dem Schaltzustand des Transistors kann dann das mindestens eine Signalelement und/oder eine Schalteinheit angesteuert werden.

Damit ist auf sehr einfache und preiswerte Weise mit einem Transistor als zentralem Bauelement die Realisierung einer Prüfeinheit möglich, die in eine Stromleitungsverlängerung integrierbar ist.

Zwischen dem Steueranschluss des Transistors und dem Schutzleiteranschluss ist vorzugsweise noch ein Strombegrenzungselement, z. B. ein Widerstand und/oder ein Gleichrichterelement geschaltet. Mit Hilfe des Gleichrichterelementes wird erreicht, dass nur eine Halbwelle eines Wechselspannungssignals auf dem Schutzleiteranschluss zur Ansteuerung genutzt wird. Dieses ist insbesondere hilfreich, wenn Emitter und Kollektor des Transistors in einem Gleichspannungspfad betrieben werden. Denkbar ist auch, dass ein (Hochvolt-) Kondensator an den Steueranschluss z. B. zwischen Basis und Ermitter des Transistors vorhanden ist.

Ein Transistor im Sinne der vorliegenden Erfindung kann auch eine integrierte Schaltung mit Transistoren sein, dessen Steuerungseingang auf einen in die integrierte Schaltung integrierten Transistor wirkt, auch wenn diesem Transistor weitere Bauelemente nachgeschaltet sind. So sind z. B. auch Differenzverstärker oder Operationsverstärker als Transistoren im Sinne der vorliegenden Erfindung einsetzbar.

Weiterhin ist es vorteilhaft, wenn die Prüfeinheit einen mit den Spannungsversorgungsleitern der elektrischen Leitung verbundenen Gleichrichter hat. Die Prüfeinheit ist dann zur Aktivierung mindestens eines Signalelementes und/oder mindestens einer zum Abschalten einer elektrisch leitenden Verbindung der Steckkontakteinheit mit Spannungsleitern der Spannungsversorgungsleiter der elektrischen Leitung eingereichten Schalteinheit im Gleichspannungspfad des Gleichrichters eingerichtet, wenn bei Prüfung mit der Prüfeinheit keine Verbindung des Schutzleiteranschlusses mit einer Schutzerde detektiert wird. Bei Prüfen des Vorliegens eines im Schutzleiter fließenden Stroms im Mikroamper-Bereich wirkt der Schutzleiteranschluss somit an der Basis des Transistors gegen das Gleichspannungspotential am Emitter, so dass die Basis-Emitter-Gleichspannung, die z. B. über einen der Steuerungsanschluss des Transistors vorgeschalteten Transistor aufgrund des Schutzleiterstroms abfällt, zur Ansteuerung des Transistors genutzt wird.

Die Stromleitungsverlängerung ist vorzugsweise eine ortsveränderliche (bewegliche) Kabeltrommel mit einem drehbar an einem Träger gelagerten Trommelgehäuse und auf einem Trommelumfang des Trommelgehäuses aufwickelbaren elektrischen Leitung. Eine oben beschriebene Prüfeinheit lässt sich preiswert und einfach in das Trommelgehäuse einbauen und auch nachrüsten.

Die Aufgabe wird daher auch mit einer Prüfeinheit zur Prüfung der Verbindung eines Schutzleiteranschlusses einer Steckkontakteinheit einer oben beschriebenen Stromleitungsverlängerung mit einer Schutzerde dadurch gelöst, dass die Prüfeinheit zum Einbau in ein Gehäuse der Stromleitungsverlängerung ausgebildet ist. Die Prüfeinheit ist damit nicht als separates Messinstrument ausgeführt, sondern als Einbauteil in eine Stromleitungsverlängerung vorgesehen.

Eine solche Prüfeinheit kann zum Beispiel als Modul eingegossen in einem Gießharz ausgeführt sein, um dieses z. B. in den Hohlkörper von Kabeltrommeln oder in Gehäuse elektrischer Geräte, wie Haushaltsgeräte (Waschmaschine, Spülmaschine, Trockner, Gefrierschrank, Kühlschrank, Herd, etc.), zu integrieren oder nachzurüsten.

So kann z. B. eine Prüfeinheit in einem Haushaltsgerät vorhanden sein, um zu überprüfen, ob die eingebaute Zuleitung mit Stecker (Stromleitungsverlängerung) der Haushaltsgeräte nach Einstecken in eine Steckdose ordnungsgemäß mit Schutzerde verbunden ist. Damit wird sichergestellt, dass das Haushaltsgerät mit metallischem Gehäuse zwangsweise nur an einer geerdeten Steckdose betrieben werden kann.

Die Erfindung wird nachfolgend anhand eines Ausführungsbeispiels mit den beigefügten Zeichnungen näher erläutert. Es zeigen:
- Figur 1: - Skizze einer Stromleitungsverlängerung mit Prüfeinheit;
- Figur 2: - Schematisches Blockdiagramm einer Prüfeinheit für eine Stromleitungsverlängerung.

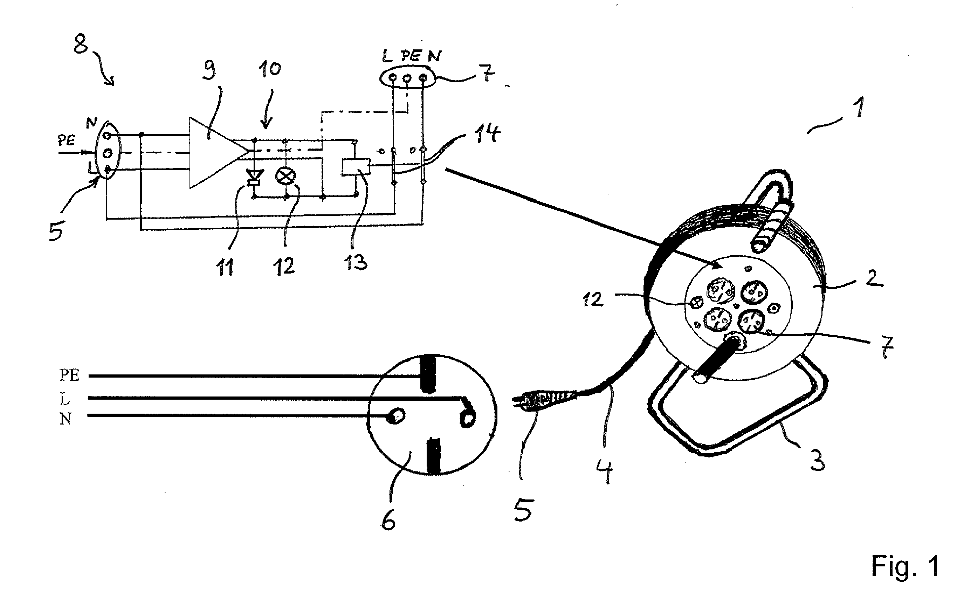

Figur 1 lässt eine Skizze einer Stromleitungsverlängerung 1 in Form einer Kabeltrommel erkennen. Die Kabeltrommel hat in an sich bekannter Weise ein Trommelgehäuse 2, das auf einem Träger 3 drehbar gelagert ist. Auf dem Trommelumfang des Trommelgehäuses 2 ist eine elektrische Leitung 4 aufwickelbar. Die elektrische Leitung 4 hat an ihrem freien Ende einen Stecker 5. Dieser ist für den betriebsbereiten Zustand der Stromleitungsverlängerung in eine Steckdose einsteckbar, um die Spannungsversorgungsleiter der elektrischen Leitung 4 mit Versorgungsspannungspotential L bzw. dem N-Leiter bzw. Rückleiter einer Spannungsversorgung zu verbinden. Der Schutzleiter der elektrischen Leitung 4 ist hingegen bei ordnungsgemäßer Anschaltung mit Schutzerde PE verbunden.

In dem Trommelgehäuse sind Steckkontakteinheiten 7 eingebaut, um mit Hilfe der Stromleitungsverlängerung 1 von der Steckdose 6 entfernt an die Steckkontakteinheiten 7 der Stromleitungsverlängerung 1 angeschlossene Verbraucher mit Spannung zu versorgen.

In das Trommelgehäuse 2 ist eine Prüfeinheit 8 eingebaut. Diese Prüfeinheit 8 ist mit den Spannungsversorgungsleitern L und N der mindestens einen Steckkontakt bzw. der damit verbundenen elektrischen Leitung 4 sowie mit dem Schutzleiteranschluss PE der elektrischen Leitung 4 eingangs- und ausgangsseitig verbunden. Die Prüfeinheit 8 hat eine Prüfschaltung 9 zur Überprüfung, ob der Schutzleiteranschluss PE der Steckkontakteinheit 7 mit einer Schutzerde PE über den Anschlussstecker 5 der elektrischen Leitung 4 verbunden ist. Hierzu ist die Prüfschaltung 9 ausgelegt, um hier zu überprüfen, ob über den Schutzleiteranschluss PE ein Strom fließt. Das Fließen eines Stroms im µ-Amper-Bereich, d. h. im Bereich von etwa 10 bis 500 pA (insbesondere im Bereich bis 100µA) zeigt an, dass der Schutzleiteranschluss mit Schutzerde PE verbunden ist. Wenn der Schutzleiteranschluss der Stromleitungsverlängerung bei Einstecken des Steckers 5 der Stromleitungsverlängerung 1 in eine Steckdose 6 z. B. aufgrund eines Kabelbruchs oder eines Kontaktfehlers oder eines in der Zuleitung bis zur Steckdose 6 liegenden Fehlers nicht mit Schutzerde PE verbunden ist, fließt kein Strom durch den mit Schutzerde PE verbindbaren Schutzleiter. Das Vorhandensein eines geringen Stroms wird mit der Prüfschaltung 5 überwacht und bei Ausbleiben eines Stroms ein Fehlerfall signalisiert. Hierzu ist am Ausgang der Prüfschaltung 9 mindestens ein Signalelement 10 beispielsweise in Form eines Summers 11 und/oder eines Leuchtelementes 12 (LED, Glühlampe o. ä.) vorgesehen. Während der Summer 11 in den Innenraum des Trommelgehäuses 2 eingebaut sein kann, ist das optische Signalelement 12 außen sichtbar in das Trommelgehäuse 2 eingebaut.

Weiterhin kann die Prüfschaltung 9 zur Ansteuerung einer Schalteinheit 13 vorgesehen sein. Die Schalteinheit 13 ist derart verschaltet, dass im ordnungsgemäßen Betrieb wie dargestellt die Spannungsversorgungsleiter für das Spannungspotential L und den Null-Leiter N durchgeschaltet werden. Im Fehlerfall zieht z. B. die Schalteinheit 13 in Form eines Schützes an und öffnet die Schaltkontakte 14, um die Spannungsversorgung zu unterbrechen. Anstelle des dargestellten Schützes als Schalteinheit 13 ist auch eine elektronische Schalteinheit z. B. mit Thyristoren, Triacs oder Optokopplern oder ähnlichem denkbar.

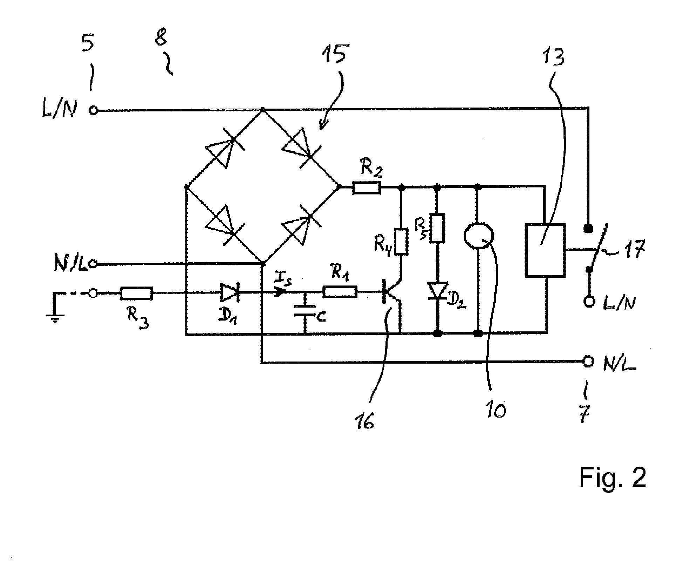

Figur 2 lässt ein Prinzipschaltbild einer Prüfeinheit 8 für eine Stromleitungsverlängerung erkennen. Dabei ist das Signalelement 10 und die Schalteinheit 13 in einen Gleichspannungspfad geschaltet, der durch einen mit dem Spannungsversorgungsleitern L und N verbundenen Gleichrichter 15 bereitgestellt wird. In den Gleichspannungspfad ist ein Transistor 16 geschaltet, der über einen vorgeschalteten Widerstand R₁ mit dem Schutzleiteranschluss PE verbunden ist.

Für den Fall, dass der Schutzleiteranschluss mit Schutzerde PE verbunden ist, fließt ein Strom I_{S} durch den Schutzleiteranschluss, der den Steueranschluss (in der Regel Basis) des Transistors 16 ansteuert. Der Transistor 16 ist damit durchgeschaltet und die Signalelemente 10 und die Schalteinheit 13 überbrückt. Für den Fall, dass der Schutzleiteranschluss nicht mit Schutzerde PE verbunden ist, fließt kein Strom I_{S}, so dass der Transistor 16 öffnet und das mindestens eine Signalelement 10 und die Schalteinheit 13 über den Widerstand R₂ am Gleichspannungspotential des Gleichrichters 15 liegen. Damit öffnet der mindestens eine Schalter 17 der Schalteinheit, um mindestens eine der Spannungsversorgungsleiter L, N zu unterbrechen. Beispielhaft ist nur ein Spannungsversorgungsleiter L abschaltbar mit der Schalteinheit 13 verbunden. Denkbar ist aber auch, dass beide Spannungsversorgungsleiter L, N oder für Drehstrom die Spannungsversorgungsleiter L1, L2, L3 und der Null-Leiter über einen Schütz 13 abschaltbar sind.

Mit der Prüfeinheit 8 wird somit bei Inbetriebnahme einer Stromleitungsverlängerung und während des Betriebs geprüft, ob der Schutzleiteranschluss der Steckkontakteinheit 7 mit Schutzerde PE verbunden ist. Wenn in der mindestens einen Steckkontakteinheit 7 die Schutzerde PE ankommt, ist ein ordnungsgemäßer Betrieb der Stromleitungsverlängerung 1 möglich. Ansonsten erfolgt eine Signalisierung eines Fehlerfalls und ggf. eine Abschaltung.

Die Abschaltung kann z. B. über einen 16 Amper-Schütz erfolgen, welches allpolig nach VD10100 den Außenleiter (L) und Neutralleiter (N) von der Netzspannung trennt, wenn der Schutzleiter nicht mit Schutzerde PE verbunden ist und somit das Betreiben von Maschinen (z. B. von Betonmischern, etc. im Außenbereich) und Geräten (z. B. Schaustellerwagen, Fischbrötchenwagen, etc.) an der Stromleitungsverlängerung gefährlich und unzulässig ist.

Eine fehlende Verbindung des Schutzleiteranschlusses mit Schutzerde PE kann z. B. durch eine rote LED (Leuchtdiode) auffällig angezeigt werden. Dabei kann eine Aufschrift "Achtung: Lebensgefahr - Schutzleiter unterbrochen!" außen neben der LED an dem Trommelgehäuse 2 angebracht sein. Zusätzlich kann die Prüfeinheit 8 mit dem Summer 11 auch akustisch warnen.

Auch bei fehlerfreier Stromleitungsverlängerung wird bei Benutzung einer ohne Anschluss an die Schutzerde ausgerüsteter Steckdose ein gefährlicher Betriebszustand angezeigt und ggf. eine gefahrbezogene Benutzung des an sich fehlerfreien Stromleitungsverlängerung unterbunden.

Der Betrieb einer Stromleitungsverlängerung ohne Verbindung mit Schutzerde PE ist insbesondere bei der Nutzung einer Stromleitungsverlängerung im freien höchst gefährlich, da der Boden oft feucht ist und somit die Berührungsspannung und der im Fehlerfall abgeleitete Strom ohne vorgeschalteten FI-Schutzschalter tödliche Folgen haben kann. Mit einem FI-Schutzschalter wird allerdings nur über eine Differenzstrommessung zwischen dem L- und N-Leiter geprüft, ob Strom unzulässig abfließt. Ein ordnungsgemäßer Anschluss eines Schutzleiteranschlusses mit Schutzerde PE wird hingegen nicht geprüft. Der FI-Schutzschalter wirkt somit wie eine Sicherung erst im Fehlerfall und stellt keinen ordnungsgemäßen Betrieb einer Stromleitungsverlängerung sicher.

## Patentansprüche

1. Stromleitungsverlängerung (1) mit einer elektrischen Leitung (4) und mit mindestens einer mit der elektrischen Leitung (4) verbundenen Steckkontakteinheit (7), **dadurch gekennzeichnet, dass** die Stromleitungsverlängerung (1) eine mit der elektrischen Leitung (4) elektrisch leitend verbundenen Prüfeinheit (8) hat, die zur Prüfung des Vorhandenseins einer Verbindung eines Schutzleiteranschlusses der Steckkontakteinheit (7) mit einer Schutzerde (PE) eingerichtet ist.

2. Stromleitungsverlängerung (1) nach Anspruch 1, **dadurch gekennzeichnet, dass** die Prüfeinheit (8) mindestens ein Signalelement (10) zur akustischen und/oder optischen Warnung hat, wobei die Prüfeinheit zur Aktivierung des mindestens einen Signalelementes (10) bei fehlender Verbindung mit einer Schutzerde (PE) eingerichtet ist.

3. Stromleitungsverlängerung (1) nach Anspruch 1 oder 2, **dadurch gekennzeichnet, dass** mindestens ein Spannungsversorgungsleiter (N, L) der elektrischen Leitung (4) mit einem zugeordneten Steckkontakt der Steckkontakteinheit (7) über eine von der Prüfeinheit (8) ansteuerbare Schalteinheit (13) abschaltbar verbunden ist, und dass die Prüfeinheit (8) zur Abschaltung der Verbindung zwischen mindestens einem der Spannungsversorgungsleiter (N, L) und dem zugeordneten Steckkontakt durch Ansteuerung der Schalteinheit (13) eingerichtet ist, wenn beim Prüfen keine Verbindung des Schutzleiteranschlusses mit einer Schutzerde (PE) festgestellt wird.

4. Stromleitungsverlängerung (1) nach Anspruch 3, **dadurch gekennzeichnet, dass** die Schalteinheit (13) ein Schütz, Thyristor, Triac, Diac oder Optokoppler zum Trennen der Verbindung zwischen mindestens einem der Spannungsversorgungsleiter (N, L) und dem zugeordneten Steckkontakt hat.

5. Stromleitungsverlängerung (1) nach einem der vorhergehenden Ansprüche, **dadurch gekennzeichnet, dass** die Prüfeinheit (8) einen Transistor (16) mit einem Steueranschluss hat, der mit dem Schutzleiteranschluss elektrisch leitend verbunden ist.

6. Stromleitungsverlängerung (1) nach Anspruch 5, **dadurch gekennzeichnet, dass** zwischen dem Steueranschluss des Transistors (16) und dem Schutzleiteranschluss ein Strombegrenzungselement (R₁), ein Kondensator und/oder ein Gleichrichterelement geschaltet ist.

7. Stromleitungsverlängerung (1) nach einem der vorhergehenden Ansprüche, **dadurch gekennzeichnet, dass** die Prüfeinheit (8) eine mit den Spannungsversorgungsleitern (N, L) der elektrischen Leitung (4) verbundenen Gleichrichter (13) hat, wobei die Prüfeinheit (8) zur Aktivierung mindestens eines Signalelementes (10) und/oder mindestens einer zum Abschalten einer elektrisch leitenden Verbindung der Steckkontakteinheit (7) mit Spannungsversorgungsleitern (N, L) der Spannungsversorgungsleiter (N, L) der elektrischen Leitung (1) eingerichteten Schalteinheit (13) im Gleichspannungspfad des Gleichrichters (15) eingerichtet ist, wenn bei Prüfung mit der Prüfeinheit (8) keine Verbindung des Schutzleiteranschlusses mit einer Schutzerde (PE) detektiert wird.

8. Stromleitungsverlängerung (1) nach einem der vorhergehenden Ansprüche, **dadurch gekennzeichnet, dass** die Stromleitungsverlängerung (1) eine ortsveränderliche Kabeltrommel mit einem drehbar an einem Träger (3) gelagerten Trommelgehäuse (2) und mit einer auf einem Trommelumfang des Trommelgehäuses (2) aufwickelbaren elektrischen Leitung (4) ist.

9. Prüfeinheit (8) zur Prüfung des Vorhandenseins einer Verbindung eines Schutzleiteranschlusses einer Steckkontakteinheit (7) einer Stromleitungsverlängerung (1) nach einem der vorhergehenden Ansprüche mit einer Schutzerde (PE), **dadurch gekennzeichnet, dass** die Prüfeinheit (8) zum Einbau in ein Gehäuse der Stromleitungsverlängerung (1) ausgebildet ist.

10. Elektrisches Gerät, insbesondere Haushaltsgeräte mit Metallgehäuse, mit einer Stromleitungsverlängerung (1) nach einem der Ansprüche 1 bis 8, und einer Prüfeinheit (8) in dem Gehäuse des elektrischen Gerätes.
